Europäisches Patentamt

European Patent Office

Office européen des brevets

(19)

(11) Veröffentlichungsnummer: **0 038 922**
**B1**

(12) **EUROPÄISCHE PATENTSCHRIFT**

(45) Veröffentlichungstag der Patentschrift:
14.01.87

(51) Int. Cl.⁴: **B 29 C 33/02, B 32 B 1/00**

(21) Anmeldenummer: **81101618.7**

(22) Anmeldetag: **06.03.81**

(54) Anordnung zur Beheizung grossflächiger Laminatformkörper.

(30) Priorität: **25.04.80 DE 3015998**

(43) Veröffentlichungstag der Anmeldung:
**04.11.81 Patentblatt 81/44**

(45) Bekanntmachung des Hinweises auf die Patenterteilung:
**14.01.87 Patentblatt 87/3**

(84) Benannte Vertragsstaaten:
**FR GB NL SE**

(56) Entgegenhaltungen:
**AT-B-355 689**
**FR-A-2 205 392**
**FR-A-2 228 589**
**GB-A-1 454 394**
**US-A-2 884 509**
**US-A-3 146 340**
**US-A-3 387 333**

(73) Patentinhaber: **Messerschmitt- Bölkow- Blohm Gesellschaft mit beschränkter Haftung, Robert- Koch- Strasse, D-8012 Ottobrunn (DE)**

(72) Erfinder: **Hahn, Michael, Dipl.- Ing., Bahnhofstrasse 15b, D-8012 Ottobrunn (DE)**
Erfinder: **Franz, Dieter, Ing. grad., Grafengars 46, D-8261 Jettenbach (DE)**
Erfinder: **Wackerle, Peter- Martin, Dipl.- Ing., Oderweg 7, D-8012 Ottobrunn (DE)**
Erfinder: **Kunstwadl, Ernst, Ottostrasse 42, D-8012 Ottobrunn (DE)**

EP 0 038 922 B1

## Beschreibung

Die Erfindung bezieht sich auf eine Anordnung zur Beheizung großflächiger Laminatkörper in Formschalen für die Heißhärtung von Laminaten unter Verwendung eines Heizelementes aus einem zwischen Glasfasergewebematten einlaminierten Kohlenstoff-Fasergewebe, gemäß dem Oberbegriff des Ansbruchs 1.

Anordnungen zur Beheizung von Laminaten sind allgemein bekannt und zählen in den verschiedensten Ausführungsformen zum Stand der Technik. Hierbei handelt es sich in allen Fällen um Laminierformen (wie elektrische Heizstäbe, Wasser- oder Ölheizrohre) mit eingebauten Heizsystemen. Diese Ausführungen sind jedoch für die Herstellung großflächiger Werkstücke, wie beispielsweise Rotorblätter für Windkraftmaschinen etc. nicht verwendbar, abgesehen davon, daß sie auch viel zu aufwendig wären, da es sich im vorliegenden Falle jeweils nur um die Herstellung relativ geringer Stückzahlen handelt. Der Gedanke, zur Beheizung solcher großen Flächen Heizmatten allgemeiner Art einzusetzen, mußte aufgegeben werden, da solche Heizmatten nicht als Formoberfläche einsetzbar sind, weil sie keine genügende Verschlußfestigkeit besitzen, sich der Formkontur nicht genau genug anpassen lassen und außerdem keine geschlossene Oberfläche bilden.

Aus der US-A- 3 146 340 ist eine Heizvorrichtung bekannt geworden, die zwischen zwei rostfreien Stahlplatten eine Graphitmatte als Heizelement aufweist, welche in zwei Glassfasermatten eingebettet ist.

Eine andere Ausführungsform, dem Prinzip nach aber der vorgenannten Einrichtung sehr ähnliche Heizvorrichtung ist aus der US-A- 2 884 509 bekannt geworden. Mit allen diesen zum Stand der Technik zählenden Geräten ist es nicht möglich, großflächige Werkstücke - wie oben bereits ausgeführt - herzustellen.

Der Erfindung liegt die Aufgabe zugrunde, eine Anordnung der eingangs genannten Art zu schaffen (US-A-3146 340), die es erlaubt, große Flächenelemente beliebiger Kontur energiesparend und gleichmäßig zu beheizen und deren Herstellung in rationeller Weise ermöglicht.

Diese Aufgabe wird durch die im Anspruch 1 niedergelegten Maßnahmen zuverlässig und optimal gelöst Vorteilkofte Ausgestellungen der Erfindung sind in den Unteransprüchen angegeben. In der nachfolgenden Beschreibung wird ein Ausführungsbeispiel beschrieben und in der Zeichnung dargestellt. Es zeigen

Fig. 1 einen Teilquerschnitt der durch Vakuum mit der Formschale verbundenen Heizmatte,

Fig. 2 einen Querschnitt durch eine auf einer Formschale aufgeklebte Heizmatte,

Fig. 3 eine Systemskizze über den elektrischen Anschluß der einzelnen Heizmatten,

Fig. 4 einen Teilquerschnitt der Randausgestaltung entlang der Längsseiten,

Fig. 5 einen Teilquerschnitt der Randausgestaltung entlang der Stirnseiten.

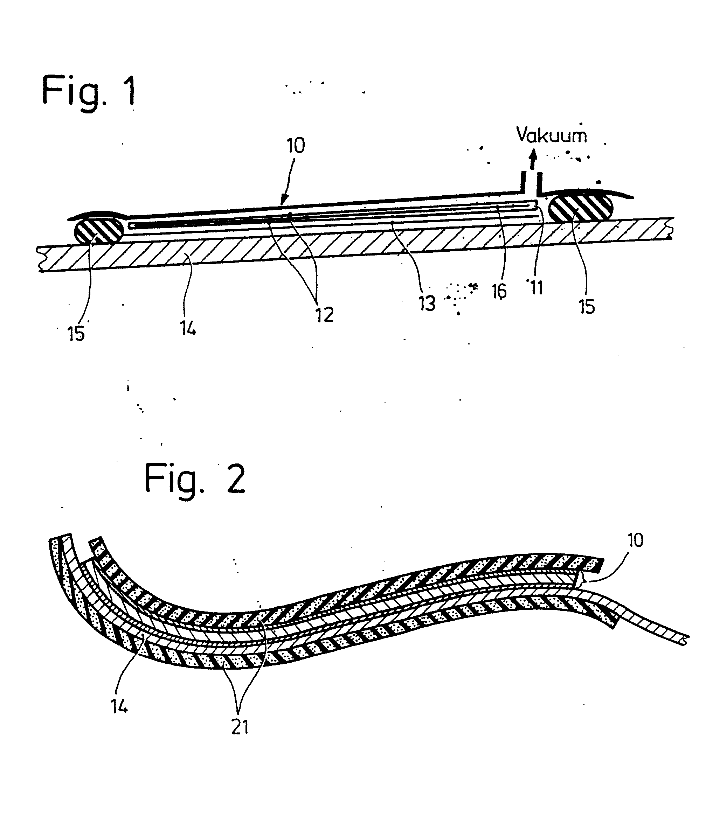

Wie die Fig. 1 und 2 zeigen, wird eine Formschale 14 entsprechend der gewünschten Gestalt des zu erstellenden Formkörpers aus Stahlblech - im vorliegenden Falle in 8 mm Stärke - gebogen und auf einem nicht gezeichneten verstell- und einstellbaren Stahlgerüst gelagert. Diese Formschale 14 wird nun mit einer Heizmatte 10 belegt, die in Länge und Breite dem zu erstellenden Formkörper entspricht.

Diese Heizmatte 10 setzt sich nun aus verschiedenen Schichten zusammen, wobei ein an sich bekanntes Heizelement 11 aus Kohlenstoffasergewebe 16 als Widerstandsheizelement verwendet wird. Formschale 14 und Heizmatte 10 bilden also das Auflager für den zu erstellenden Formkörper. Diese Anordnung bringt eine Reihe wesentlicher Vorteile. So wird beispielsweise eine energetische günstige zentrale Lage der Heizung direkt am Bauteil erreicht, die Heizung selbst kann individuell ausgelegt werden, infolge der nachstehend beschriebenen Zusammensetzung der Heizmatte 10 erfolgt keine Erwärmung des Unterbaus und außerdem werden kurze sogenannte Totstrecken der Heizregelung erreicht, was durch die unmittelbare Nähe und den großflächigen Kontakt zwischen Heizung und Bauteil hervorgerufen wird.

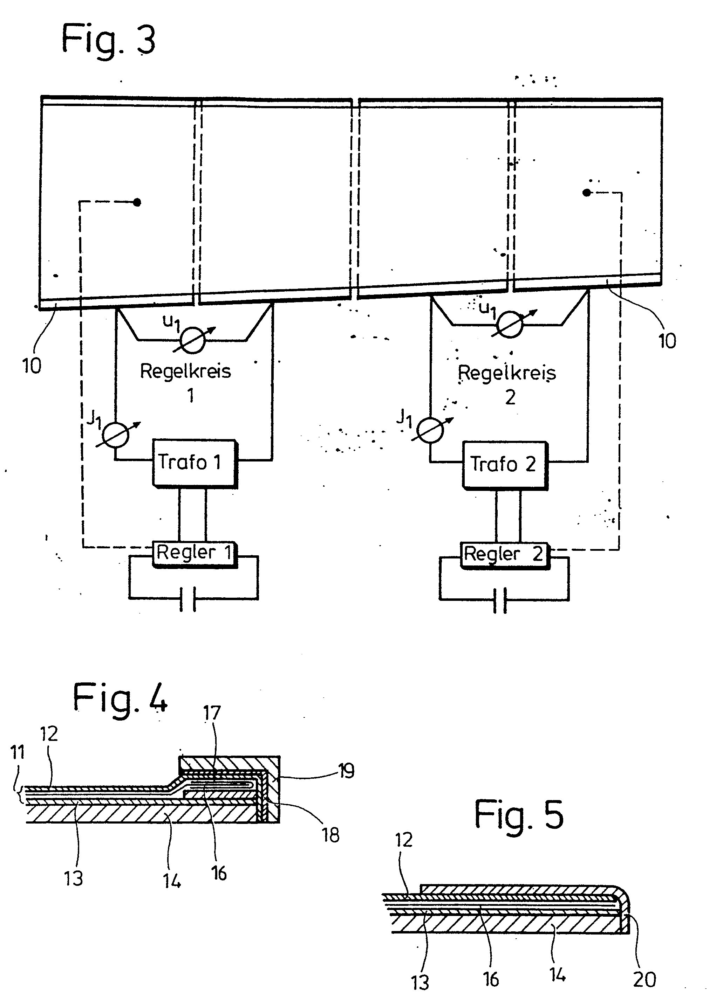

Entsprechend der maximalen Leistungsaufnahme der Heizmatten 10 können über die gesamte Formfläche gesehen, mehrere Heizkreise angeordnet werden, wie dies auch in der Fig. 3 dargestellt ist. Hier handelt es sich um zwei Regelkreise, deren Aufbau keiner weiteren Erläuterungen bedarf, da er ohne weiteres aus der Zeichnung entnommen werden kann. Die Heizkreise der Heizmatten 10 setzen sich aus zwei, dem Formstück entsprechende breite Streifen aus Kohlenstoffasergewebe 16 - hier beispielsweise vom Typ G 801 (Fa. Brochier) - zusammen, die an den Enden in Kupferstreifen 17 eingefalzt sind.

Der Aufbau der Heizmatten 10 setzt sich im gezeigten Ausführungsbeispiel wie folgt zusammen:

Zur Isolation gegenüber der Formschale 14 sind zwei Lagen 13 aus Glasfasergewebe - beispielsweise 160 g/m$^2$, 0,2 mm dick - vorgesehen, auf die das vorgenannte Kohlefasergewebe 16 aufgelegt wird. Darauf werden ein oder mehrere Lagen Glasfasergewebe gleichen Typs gelegt. Im Falle der Vakuum-Verbindung von Heizmatte und Formschale 14 können die Gewebelagen trocken, ansonsten mit einem Reaktionsharz (z.B. Polyester, Epoxy etc.) imprägniert in die Formschale 14 eingelegt werden. Zur Erzeugung einer günstigen Temperaturverteilung werden zur Isolierung auf die Formschalenunterseite Polyätherschaumbahnen 21 aufgeklebt und ebensolche auf das Heizlaminat bzw. auf das spätere Bauteillaminat gelegt.

Natürlich kann es vorteilhaft und auch erforderlich sein, da zur Isolierung gegenüber der Stahlformschale 14 mehr als zwei Glasvliesschichten 13 verwendet werden. Auch wird es verschiedentlich vorteilhafter sein, die Heizmatte 10 nicht über eine Vakuumeinrichtung mit der Formschale 14 zu verbinden, sondern daß diese mit letzterer verklebt wird. Wie schon erwähnt, können auch die einzelnen Laminatlagen unter und auf der als Heizaggregat dienenden Kohlefaserschicht 16 je nach den Umständen in ihrer Anzahl variiert werden.

In der Fig. 4 ist die Ausgestaltung der Randlängsseiten der Heizmatte 10 im Zusammenhang mit der Formschale 14 gezeigt. Das in einen Kupferstreifen 17 eingefalzte Heizelement 11 und die Isolierungslagen 12 und 13 bilden zusammen mit der Kante der Formschale 14 eine bundige Außenkante, die durch eine winkelförmige Gewebelaminatabdeckung 18 eingefaßt ist. Letztere wiederum wird von einem winkelförmigen Aluminiumprofil 19 als Kantenschutz eingerahmt. Dieses Alu-Profil 19 ist an den Stellen der Stromdurchführung ausgespart.

Die in Fig. 5 gezeigte stirnseitige Randausführung sieht lediglich eine winkelförmige Randabdeckung 20 aus einem Glasfaserlaminat vor.

Durch die vorgeschlagenen Maßnahmen ist nun eine Heizanordnung für großflächige Bauelemente geschaffen worden, die sowohl Heizenergie sparend als auch Heizenergie gleichmäßig verteilend ausgebildet ist. Die vorgeschlagene Heizmatte paßt sich jeder Formkontur an und liegt unmittelbar am Bauteil an.

**Patentansprüche**

1. Anordnung zur Beheizung großflächiger Laminatkörper in Formschalen (14) für die Heißhärtung von Laminaten unter Verwendung eines Heizelementes (11) aus einem zwischen Glasfasergewebematten (12) einlaminierten Kohlenstoff-Fasergewebe (16), dadurch gekennzeichnet, daß das Heizelement (11) zusammen mit einer oder mehreren zwischen Heizelement (11) und Formschale (14) angeordneten Lagen einer Isolationsschicht (13) eine Heizmatte (10) bildet, die mit der Formschale (14) durch Vakuum oder Verklebung verbunden ist.

2. Anordnung nach Anspruch 1, dadurch gekennzeichnet, daß die Heizmatte (10) bei der Vakuumbefestigung allseitig über Silikonschnure (15) dichtend mit der Formschale (14) verbunden ist.

3. Anordnung nach Anspruch 1, dadurch gekennzeichnet, daß das Kohlenstoff-Fasergewebe (16) im Heizelement (11) der Heizmatte (10) über eine gesamte Länge zur Stromeinleitung in ein Kupferstreifenband (17) eingefalzt ist.

4. Anordnung nach einem der Ansprüchen 1 bis 3, dadurch gekennzeichnet, daß die Längs- und Stirnseiten des Heizelementes (11) und der Isolierschichten (13) zusammen mit den Kanten der Formschale (14) mit mehreren Laminatschichten (18, 20) eingefaßt sind.

5. Anordnung nach einem der Ansprüchen 1 bis 4, dadurch gekennzeichnet, daß die Unterseite der Formschale (14) und die Oberseite der Heizmatte (10) mit Polyätherschaum (21) belegt sind.

**Claims**

1. An arrangement for heating large-area laminated bodies in mould shells (14) for the heat setting of laminates using a heating element (11), made of a carbon fibre fabric (16) laminated between glassfibre fabric mats (12), characterised in that the heating element (11), together with one or more plies of an insulating layer (13) which are arranged between heating element (11) and mould shell (14), forms a heating mat (10) which is connected to the mould dish (14) by vacuum or bonding.

2. An arrangement according to claim 1, characterised in that the heating mat (10), in the case of vacuum fastening, is connected on all sides by way of silicone cords (15) in sealing manner to the mould shell (14).

3. An arrangement according to claim 1, characterised in that the carbon fibre fabric (16) in the heating element (11) of the heating mat (10) is folded in over its entire length for the current introduction into a copper strip band (17).

4. An arrangement according to one of claims 1 to 3, characterised in that the longitudinal and front sides of the heating element (11) and of the insulating layers (13) together with the edges of the mould shell (14) are surrounded by several laminate layers (18, 20).

5. An arrangement according to one of claims 1 to 4, characterised in that the lower side of the mould shell (14) and the upper side of the heating mat (10) are coated with polyether foam (21).

**Revendications**

1. Dispositif pour le chauffage de corps stratifiés de grande surface dans des coques profilées (14) pour le durcissement à chaud de stratifiés avec emploi d'un élément de chauffage (11) constitué par un tissu de fibres de carbone (16) interposé entre des mats de tissu de fibres de verre (12), caractérisé par le fait que l'élément de chauffage (11), en combinaison avec une ou plusieurs épaisseurs, disposées entre l'élément de chauffage (11) et la coque profilée (14), d'une couche d'isolation (13), forme un mat chauffant (10) qui est raccordé à la coque profilée (14) par vide ou collage.

2. Dispositif selon la revendication 1, caractérisé par le fait que le mat chauffant (10), en cas de fixation par vide, est raccordé de tous côtés de façon étanche à la coque profilée (14) par des cordons de silicone (15).

3. Dispositif selon la revendication 1, caractérisé par le fait que le tissu de fibres de carbone (16) dans l'élément de chauffage (11) du mat chauffant (10) est encastré dans une bandé de cuivre (17) sur toute sa longueur pour l'amenée du courant.

4. Dispositif selon l'une des revendications 1 à 3, caractérisé par le fait que les côtés longitudinaux et frontaux de l'élément de chauffage (11) et des couches d'isolation (13), en liaison avec les arêtes de la coque profilée (14), sont bordés par plusieurs couches stratifiées (18, 20).

5. Dispositif selon l'une des revendications 1 à 4, caractérisé par le fait que la face inférieure de la coque profilée (14) et la face supérieure du mat chauffant (10) sont recouvertes d'une mousse de polyéther (21).

# Fig. 1

# Fig. 2

# Fig. 3

# Fig. 4

# Fig. 5